# EUROPEAN PATENT APPLICATION

(11) **EP 4 513 429 A1**
(43) Date of publication of application: **26.02.2025**
(21) Application number: 23791888.3
(22) Date of filing: 19.04.2023
(51) Int. Cl.: G06T 7/00, G01N 21/88, G06V 10/82

(54) **PROCESSING METHOD, AND PROCESSING DEVICE USING SAME**

(30) Priority: 20.04.2022 JP 2022069565
(71) Applicant: Panasonic Intellectual Property Management Co., Ltd., Kadoma-shi, Osaka 571-0057 (JP)
(72) Inventor: YAJI, Shinya, Kadoma-shi, Osaka 571-0057 (JP); HORII, Toshihide, Kadoma-shi, Osaka 571-0057 (JP)
(74) Representative: Appelt, Christian W.
(86) International application number: PCT/JP2023/015579
(87) International publication number: WO 2023/204240

(57) **Abstract**

A first input unit 110 receives an inspection image to be inspected which is obtained by imaging a product manufactured based on design data. A second input unit 112 receives a reference data including the design data. A processing unit 114 subjects the inspection image input to the first input unit 110 and the reference data input to the second input unit 112 to a process in a learned neural network. An output unit 118 outputs a grouping result of the inspection image as a processing result of the processing unit 114.

## Description

### TECHNICAL FIELD

The present disclosure relates to a processing technology and, more particularly, to a processing method for subjecting an image to a process and a processing device using the processing method.

### BACKGROUND ART

In order to determine whether an object is OK or NG, a learned model that is learned from an image of an NG object for learning and learning data representing a degree of NG of the object is prepared in advance. When an image of a target object is acquired, OK or NG of the object is output based on the image and the learned model (see, for example, Patent Literature 1.).

### RELATED-ART LITERATURE

### PATENT LITERATURE

Patent Literature 1: JP 2019-175015 A

### SUMMARY OF INVENTION

### TECHNICAL PROBLEM

In a case where an image representing an NG object in various situations is determined by a neural network, learning needs to be sufficient in order to improve determination accuracy.

The present disclosure addresses the above-described issue, and an illustrative purpose thereof is to provide a technology for inhibiting reduction in the accuracy of the process, while inhibiting an increase in the volume of work required for learning at the same time.

### SOLUTION TO PROBLEM

In order to solve the above problems, a processing device according to an aspect of the present disclosure includes: a first input unit that receives an inspection image to be inspected, which is obtained by imaging a product manufactured based on design data; a second input unit that receives a reference data including the design data; a processing unit that subjects the inspection image input to the first input unit and the reference data input to the second input unit to a process in a learned neural network; and an output unit that outputs a grouping result of the inspection image as a processing result of the processing unit.

Another aspect of the present disclosure provides a processing method. The method includes the steps of: receiving an inspection image to be inspected, which is obtained by imaging a product manufactured based on design data; receiving a reference data including the design data; subjecting the received inspection image and the received reference data to a process in a learned neural network; and outputting a grouping result of the inspection image as a processing result.

Optional combinations of the aforementioned constituting elements, and implementations of the present disclosure in the form of methods, devices, systems, computer programs, recording mediums recording computer programs, etc. may also be practiced as additional modes of the present disclosure.

### ADVANTAGEOUS EFFECTS OF INVENTION

According to the present disclosure, it is possible to inhibit reduction in the accuracy of the process, while inhibiting an increase in the volume of work required for learning at the same time.

### BRIEF DESCRIPTION OF DRAWINGS

[Fig. 1] Fig. 1A and Fig. 1B are diagrams illustrating a configuration of a processing device according to a first embodiment.
[Fig. 2] Fig. 2A to Fig. 2C are diagrams illustrating a configuration of the processing unit in Fig. 1A and Fig. 1B.
[Fig. 3] Fig. 3 is a diagram illustrating reference data input to the second input unit in Fig. 1A and Fig. 1B.
[Fig. 4] Fig. 4 is a diagram illustrating a data structure of training data input to a training data input unit in Fig. 1A.
[Fig. 5] Fig. 5 is a diagram illustrating an outline of a process in the processing unit in Fig. 1A and Fig. 1B.
[Fig. 6] Fig. 6A and Fig. 6B are diagrams illustrating reference data input to the second input unit according to a second embodiment.
[Fig. 7] Fig. 7 is a diagram illustrating a configuration of the processing unit according to the second embodiment.
[Fig. 8] Fig. 8A and Fig. 8B are diagrams illustrating reference data input to the second input unit according to a third embodiment.
[Fig. 9] Fig. 9 is a diagram illustrating a configuration of the processing unit according to a fourth embodiment.

### DESCRIPTION OF EMBODIMENTS

### (First Embodiment)

A summary will be given before describing the embodiment of the present disclosure in specific details. The embodiment relates to a processing device that determines an inspection image, which images a product to be inspected. The determination is whether the product is OK or NG, which defective item is included in the product, or the like. Conventionally, a neural network has been trained based on an image of an OK product, an image of an NG product, an image of a product including a defective item, and an image of a product not including a defective item, and then the inspection image is input to the learned neural network. When various products are to be inspected, it is necessary to make the neural network to learn based on images of various products in order to improve the accuracy of the inspection. The volume of work required for learning increases for such relearning.

The processing device according to the embodiment receives an image showing a product and reference data showing a product having no problem and performs learning using information on defect items included in the inspection image as training data. After learning the training data, the processing device receives the inspection image and the reference data and identifies defect items included in the inspection image. In other words, the processing device does not learn the reference data itself but learn results from a comparison between the inspection image and the reference data. Thus, when the reference data is changed due to a product change, it is only required to input new reference data and an inspection image to the processing device, making it possible to skip new learning.

A captured image obtained by imaging a product having a problem is used for the reference data. In particular, a captured image obtained by imaging an image of a product having a median value of product variation (dimensions, color, etc.) is desirable. However, since it is difficult to prepare such a captured image, the time for selecting the captured image data becomes long, and the workload also increases. In order to suppress a decrease in processing accuracy while suppressing an increase in the volume of work required for learning, the processing device according to the present embodiment uses, as reference data, design data used for product design, for example, computer-aided design (CAD) data.

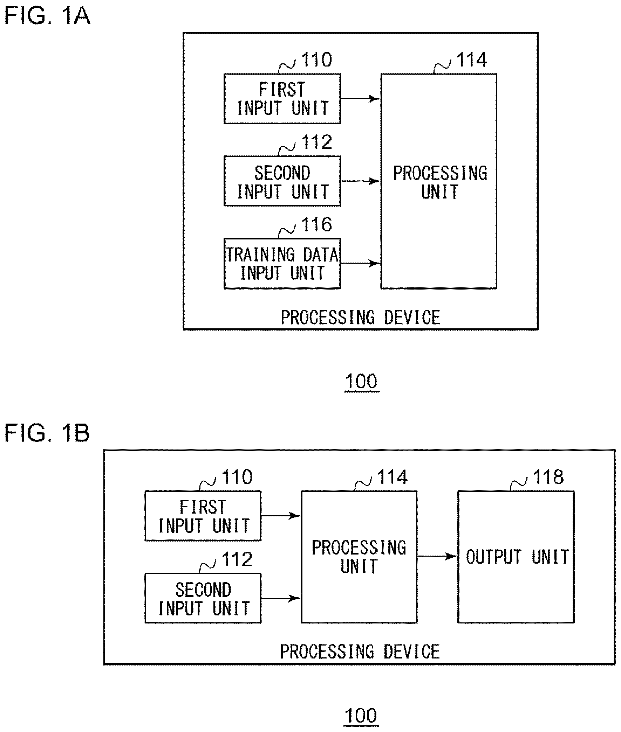

Fig. 1A and Fig. 1B show a configuration of a processing device 100. In particular, Fig. 1A shows a configuration for a learning process, and Fig. 1B shows a configuration for a determination process. The determination process is a process for identifying defect items included in the inspection image by applying a neural network to the inspection image and the reference data. Examples of defect items are crack, chip, and missing component. In addition, the determination process may determine whether a product shown in the inspection image is OK or NG. Furthermore, the determination process may determine grade within the non-defective product range of the product shown in the inspection image. Examples of the grades of the product within the non-defective product range are a gray zone product and a B-grade product. The processing device 100 in Fig. 1A and the processing device 100 in Fig. 1B may be configured as the same device or different devices.

The processing device 100 includes a first input unit 110, a second input unit 112, a processing unit 114, a training data input unit 116 as features for the learning process and includes the first input unit 110, the second input unit 112, the processing unit 114, and an output unit 118 as features for the determination process. The processing unit 114 is trained in the learning process, and the processing unit 114 is used in the determination process. The configuration of the processing unit 114 will be described before describing the configuration of the processing device 100.

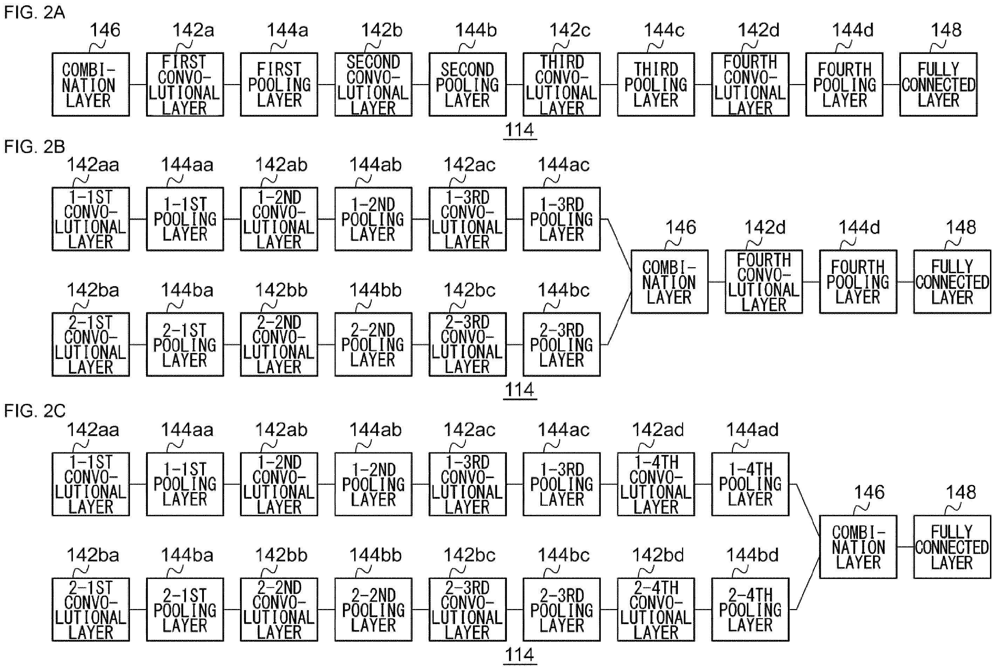

Fig. 2A to Fig. 2C show a configuration of the processing unit 114. Fig. 2A shows an exemplary configuration of the processing unit 114. The processing unit 114 includes a first convolutional layer 142a, a second convolutional layer 142b, a third convolutional layer 142c, a fourth convolutional layer 142d, which are generically referred to as convolutional layers 142, a first pooling layer 144a, a second pooling layer 144b, a third pooling layer 144c, a fourth pooling layer 144d, which are generically referred to as pooling layers 144, a combination layer 146, and a fully connected layer 148.

The combination layer 146 is connected to the first input unit 110 and the second input unit 112 in Fig. 1A and Fig. 1B, and receives an inspection image from the first input unit 110 and receives a reference data from the second input unit 112. The combination layer 146 combines the inspection image and the reference data. In a first example of combination, the inspection image and the reference data, which are the two inputs, are merged into one image as different channels. In this case, a combination of the inspection image and the reference data is generated. In a second example of combination, a difference between corresponding pixels in the inspection image and the reference data, which are the two inputs, is calculated, and an image (hereinafter, "differential image") in which differences are arranged for the respective pixels is generated. In a third example of combination, the inspection image, the reference data, and the differential image are merged into one image as separate channels. In this case, a combination of the inspection image, the reference data, and the differential image is generated. In a fourth example of combination, the reference data and the differential image are merged into one image as separate channels. In this case, a combination of the reference data and the differential image is generated. In a fifth example of combination, the inspection image and the differential image are merged into one image as separate channels. In this case, a combination of the inspection image and the differential image is generated. The combination layer 146 outputs a result of combination (hereinafter, "combined image"). The inspection image, the reference data, and the differential image are generically referred to as "images".

The convolutional layer 142 subjects each channel in the combined image to spatial filtering by successively shifting a spatial filter of a size smaller than the size of the image. Since spatial filtering is a publicly known technology, a description thereof is omitted. Spatial filtering is equivalent to a convolutional process, and the convolutional process extracts a feature value of the image. Padding, etc. may be performed in the convolutional layer 142. The convolutional layer 142 may also use a plurality of spatial filters in parallel and perform a plurality of spatial filtering steps in parallel in the image in each channel. Using a plurality of spatial filters in parallel increases the images. This is equivalent to increasing the number of channels in the combined image.

The pooling layer 144 reduces the size of the image by aggregating a plurality of pixels included in an arbitrary region in the image in each channel in the combined image into a single pixel. For aggregation of a plurality of pixels into a single pixel, average pooling or maximum pooling is performed. In average pooling, an average value of a plurality of pixel values in the region is used for the single pixel, while in maximum pooling, the maximum value of a plurality of pixel values in the region is used for the single pixel. A pooling process is performed to reinforce the robustness for translation of a representative value or an average value in the region of interest.

In this case, the processes are performed in the order of the first convolutional layer 142a, the first pooling layer 144a, the second convolutional layer 142b, the second pooling layer 144b, the third convolutional layer 142c, the third pooling layer 144c, the fourth convolutional layer 142d, and the fourth pooling layer 144d. In other words, a convolutional process and a pooling process are repeated for the combined image. By repeating a convolutional process and a pooling process, the size of the image in each channel is progressively reduced. As a result, a combined image having a 1×1 spatial dimension and having one or more channels is output to the fully connected layer 148.

The fully connected layer 148 receives an image from which a feature value is extracted. The fully connected layer 148 identifies the image by performing grouping into a plurality of classes based on the feature value. A publicly known technology may be used in the process in the fully connected layer 148, and a description thereof is omitted. A result of grouping in the fully connected layer 148 shows a probability for each of three classes including "OK", "crack", and "chip". "OK" represents a case where the inspection image does not include a defect item with reference to the reference data, "crack" represents a case where the inspection image includes a cracked portion with reference to the reference data, and "chip" represents a case where the inspection image includes a chipped portion with reference to the reference data. In particular, "crack" and "chip" can be said to be defect items. "Missing component" may be grouped as a defect item in addition to "crack" and "chip".

Based on the configuration of the processing unit 114 as described above, a description will now be given of the learning process in the processing device 100 with reference to Fig. 1A. The first input unit 110 receives an image for learning instead of the inspection image. Unlike the case of the inspection image for which it is not known what defect items are included, defect items included in the image for learning are known. The second input unit 112 receives the reference data.

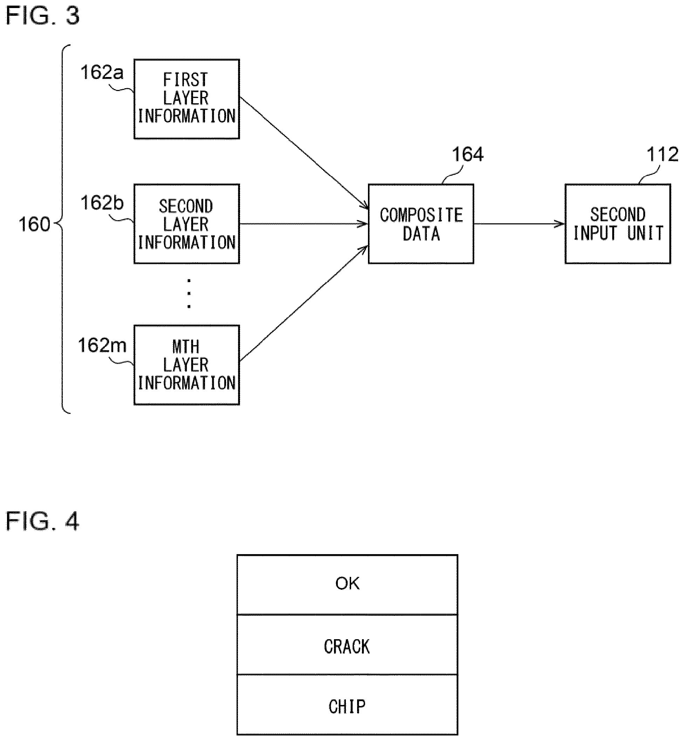

Fig. 3 shows reference data input to the second input unit 112. Design data 160 is, for example, CAD data, and includes first layer information 162a, second layer information 162b,..., and Mth layer information 162m, which are generically referred to as layer information 162. Images obtained by imaging a product manufactured based on the design data 160 are the inspection image and the image for learning. The layer information 162 is, for example, outer shape data, arrangement data of component A, arrangement data of component B, and unevenness data, but is not limited thereto. Composite data 164 is generated by combining a plurality of pieces of layer information 162 as one image. The design data 160 and the composite data 164 are included in the reference data. The composite data 164 is input to the second input unit 112 as reference data. The description returns to Fig. 1A.

The training data input unit 116 receives training data corresponding to the relationship between the image for leaning and the reference data, i.e., receives training data indicating defect items included in the image for learning. Fig. 4 shows a data structure of the training data input to the training data input unit 116. The training data has, for example, three channels, and includes the OK, the crack, and the chip similarly to the grouping result in the fully connected layer 148. Here, in a case where the defect item is not included in the image for learning with respect to the reference data, the training data indicates the OK. On the other hand, in a case where a defect item is included in the image for learning with respect to the reference data, the training data indicates the crack or the chip depending on the cause. The description returns to Fig. 1A.

The processing unit 114 is configured as described in Fig. 2A. The processing unit 114 is caused to learn a coefficient of a spatial filter of each convolutional layer 142 so that the relationship between the image for learning received by the first input unit 110 and the reference data received by the second input unit 112 is represented by the training data received by the training data input unit 116. A publicly known technology may be used in the learning itself of the coefficient of the spatial filter, and a description thereof is omitted.

A description will now be given of the determination process in the processing device 100 with reference to Fig. 1B. In the case where the processing devices 100 in Fig. 1A and Fig. 1B are configured as different devices, the coefficient of the spatial filter derived by learning in the processing unit 114 in Fig. 1A is set in the processing unit 114 in Fig. 1B.

The first input unit 110 receives the inspection image, and the second input unit 112 receives the reference data. The reference data is, for example, the composite data 164. The processing unit 114 has a configuration shown in Fig. 2A and subjects the inspection image input to the first input unit 110 and the reference data input to the second input unit 112 to the process in the neural network. The output unit 118 outputs information that results from the process in the processing unit 114, which relates to the result of grouping for the inspection image, i.e. the defect items included in the inspection image with reference to the reference data. As an example, information indicating one of the OK, the crack, and the chip is output.

A further exemplary configuration of the processing unit 114 will be shown below. Fig. 2B shows another exemplary configuration of the processing unit 114. The processing unit 114 includes a 1-1st convolutional layer 142aa, a 1-2nd convolutional layer 142ab, a 1-3rd convolutional layer 142ac, a 2-1st convolutional layer 142ba, a 2-2nd convolutional layer 142bb, a 2-3rd convolutional layer 142bc, and a fourth convolutional layer 142d, which are generically referred to as convolutional layers 142, a 1-1st pooling layer 144aa, a 1-2nd pooling layer 144ab, a 1-3rd pooling layer 144ac, a 2-1st pooling layer 144ba, a 2-2nd pooling layer 144bb, a 2-3rd pooling layer 144bc, and a fourth pooling layer 144d, which are generically referred to as pooling layers 144, a combination layer 146, and a fully connected layer 148.

The 1-1st convolutional layer 142aa, the 1-1st pooling layer 144aa, the 1-2nd convolutional layer 142ab, the 1-2nd pooling layer 144ab, the 1-3rd convolutional layer 142ac, and the 1-3rd pooling layer 144ac are arranged in the stated order. These layers subject the inspection image input to the first input unit 110 to the aforementioned process. The 2-1st convolutional layer 142ba, the 2-1st pooling layer 144ba, the 2-2nd convolutional layer 142bb, the 2-2nd pooling layer 144bb, the 2-3rd convolutional layer 142bc, and the 2-3rd pooling layer 144bc are arranged in the stated order. These layers subject the reference data input to the second input unit 112 to the aforementioned process.

The combination layer 146 receives a processing result from the 1-3rd pooling layer 144ac and a processing result from the 2-3rd pooling layer 144bc. The processing result from the 1-3rd pooling layer 144ac is a result of processing the inspection image (hereinafter, "first processing result"), and the processing result from the 2-3rd pooling layer 144bc is a result of processing the reference data (hereinafter, "second processing result"). Each of the first processing result and the second processing result may be composed of a plurality of channels. The combination layer 146 combines the first processing result and the second processing result. Combination may be built according to any of the first to fifth examples described above. A differential image is generated between corresponding channels in the first processing result and the second processing result. The combination layer 146 outputs a result of combination (hereinafter, also referred to as "combined image").

The fourth convolutional layer 142d and the fourth pooling layer 144d subject the combined image to a convolutional process and a pooling process successively. The fully connected layer 148 is configured as described in Fig. 2A. The learning process and the determination process in the processing device 100 including the processing unit 114 configured as described above are as already described, and a description thereof is omitted. Learning may result in a weight coefficient used to subject the inspection image to the process in the convolutional layer 142 being commonly used as a weight coefficient to subject the reference data to the process in the convolutional layer 142. Specifically, the weight coefficient is commonly used in the 1-1st convolutional layer 142aa and in the 2-1st convolutional layer 142ba. Furthermore, the weight coefficient is commonly used in the 1-2nd convolutional layer 142ab and in the 2-2nd convolutional layer 142bb, and the weight coefficient is commonly used in the 1-3rd convolutional layer 142ac and in the 2-3rd convolutional layer 142bc.

Fig. 2C shows a still further exemplary configuration of the processing unit 114. The processing unit 114 includes a 1-1st convolutional layer 142aa, a 1-2nd convolutional layer 142ab, a 1-3rd convolutional layer 142ac, a 1-4th convolutional layer 142ad, a 2-1st convolutional layer 142ba, a 2-2nd convolutional layer 142bb, a 2-3rd convolutional layer 142bc, and a 2-4th convolutional layer 142bd, which are generically referred to as convolutional layers 142, a 1-1st pooling layer 144aa, a 1-2nd pooling layer 144ab, a 1-3rd pooling layer 144ac, a 1-4th pooling layer 144ad, a 2-1st pooling layer 144ba, a 2-2nd pooling layer 144bb, a 2-3rd pooling layer 144bc, and a 2-4th pooling layer 144bd, which are generically referred to as pooling layers 144, a combination layer 146, and a fully connected layer 148.

The 1-1st convolutional layer 142aa, the 1-1st pooling layer 144aa, the 1-2nd convolutional layer 142ab, the 1-2nd pooling layer 144ab, the 1-3rd convolutional layer 142ac, the 1-3rd pooling layer 144ac, the 1-4th convolutional layer 142ad, and the 1-4th pooling layer 144ad are arranged in the stated order. These layers subject the inspection image input to the first input unit 110 to the aforementioned process. The 2-1st convolutional layer 142ba, the 2-1st pooling layer 144ba, the 2-2nd convolutional layer 142bb, the 2-2nd pooling layer 144bb, the 2-3rd convolutional layer 142bc, the 2-3rd pooling layer 144bc, the 2-4th convolutional layer 142bd, and the 2-4th pooling layer 144bd are arranged in the stated order. These layers subject the reference data input to the second input unit 112 to the aforementioned process.

The combination layer 146 receives a processing result from the 1-4th pooling layer 144ad and a processing result from the 2-4th pooling layer 144bd. The processing result from the 1-4th pooling layer 144ad is a result of processing the inspection image (hereinafter, also referred to as "first processing result"), and the processing result from the 2-4th pooling layer 144bd is a result of processing the reference data (hereinafter, also referred to as "second processing result"). The combination layer 146 combines the first processing result and the second processing result. Combination may be built according to any of the first to fifth examples described above. The combination layer 146 outputs a result of combination (hereinafter, also referred to as "combined image").

The fully connected layer 148 is configured as described in Fig. 2A. The learning process and the determination process in the processing device 100 including the processing unit 114 configured as described above are as already described, and a description thereof is omitted. Learning may result in a weight coefficient used to subject the inspection image to the process in the convolutional layer 142 being commonly used as a weight coefficient to subject the reference data to the process in the convolutional layer 142. Specifically, the weight coefficient is commonly used in the 1-1st convolutional layer 142aa and in the 2-1st convolutional layer 142ba, and the weight coefficient is commonly used in the 1-2nd convolutional layer 142ab and in the 2-2nd convolutional layer 142bb. Furthermore, the weight coefficient is commonly used in the 1-3rd convolutional layer 142ac and in the 2-3rd convolutional layer 142bc, and the weight coefficient is commonly used in the 1-4th convolutional layer 142ad and in the 2-4th convolutional layer 142bd.

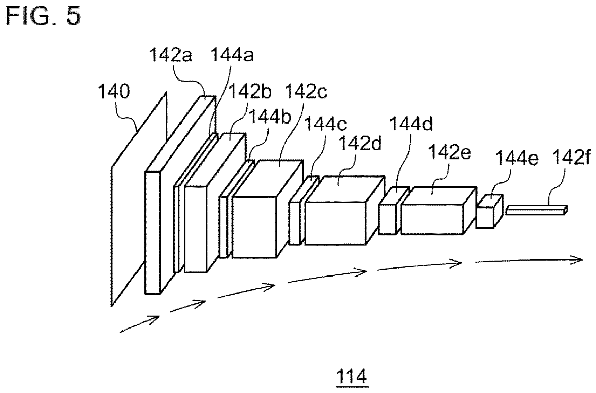

The fully connected layer 148 may be excluded from the configuration of the processing unit 114. A description will be given of the configuration with reference to Fig. 5. Fig. 5 shows an outline of a process in the processing unit 114. For clarity of explanation, the processing unit 114 is shown as a one-input unit, and the combination layer 146 is omitted from the illustration. However, the processing unit 114 is a two-input unit as in the case of Fig. 2A to Fig. 2C, and the combination layer 146 may be included. The processing unit 114 includes a first convolutional layer 142a, a second convolutional layer 142b, a third convolutional layer 142c, a fourth convolutional layer 142d, a fifth convolutional layer 142e, and a sixth convolutional layer 142f, which are generically referred to as convolutional layers 142, a first pooling layer 144a, a second pooling layer 144b, a third pooling layer 144c, a fourth pooling layer 144d, and a fifth pooling layer 144e, which are generically referred to as pooling layers 144. The convolutional layers 142 and the pooling layers 144 are shown as blocks to give an image of the respective processes.

The input image 140 is an image to be processed in the determination process in the processing device 100. Since the neural network in the processing unit 114 does not include a fully connected layer 148, like a fully convolutional neural network, a limit to the size of the input image 140 is not provided. The input image 140 is input to the first convolutional layer 142a. In this case, in the processing unit 114, the first convolutional layer 142a, the first pooling layer 144a, the second convolutional layer 142b, the second pooling layer 144b, the third convolutional layer 142c, the third pooling layer 144c, the fourth convolutional layer 142d, the fourth pooling layer 144d, the fifth convolutional layer 142e, the fifth pooling layer 144e, and the sixth convolutional layer 142f are arranged in the stated order. In other words, a convolutional process and a pooling process are repeated as already described.

Based on the configuration of the processing unit 114 as described above, a description will now be given of the learning process in the processing device 100 with reference to Fig. 1A. As mentioned above, the first input unit 110 receives the image for learning, the second input unit 112 receives the reference data, and the training data input unit 116 receives the training data. The processing unit 114 is caused to learn a coefficient of a spatial filter of each convolutional layer 142 so that the relationship between the image for learning received by the first input unit 110 and the reference data received by the second input unit 112 is represented by the training data received by the training data input unit 116.

Here, the size of the training data may be configured to have a 1×1 spatial dimension. Therefore, the training data merely indicates one of a limited number of classes to indicate the relationship between the image for learning and the reference data. In other words, the training data for one channel need only indicate whether one class is met. Thus, as compared with the case of producing an image subjected to segmentation by filling objects with colors, the volume of work to produce one item of training data is reduced. As a result, it is possible to increase the number of items of training data while also inhibiting an increase in the volume of work.

Meanwhile, the image for learning and the reference data are original images by which the training data is output when the determination process is performed accurately, and their sizes are defined to result in training data having a 1×1 spatial dimension. Since a limit to the size of the input image 140 is not provided, the image used in the learning process and the image used in the determination process may have different sizes.

The device, the system, or the entity that executes the method according to the present disclosure is provided with a computer. By causing the computer to run a program, the function of the device, the system, or the entity that executes the method according to the present disclosure is realized. The computer includes a processor that operates in accordance with the program as a main hardware feature. The disclosure is non-limiting as to the type of the processor so long as the function is realized by running the program. The processor is composed of one or a plurality of electronic circuits including a semiconductor integrated circuit (IC) or a large-scale integration (LSI). The plurality of electronic circuits may be integrated in one chip or provided in a plurality of chips. The plurality of chips may be aggregated in one device or provided in a plurality of devices. The program is recorded in a non-transitory recording medium such as a computer-readable ROM, optical disk, and hard disk drive. The program may be stored in a recording medium in advance or supplied to a recording medium via wide area communication network including the Internet.

According to the present embodiment, the inspection image and the reference data are subject to a neural network process, thereby allowing information on the grouping result for the inspection image to be output as the result of comparing the two images. In addition, since the result of comparing the two images is output, even when the reference data is changed, the volume of learning required for learning a new reference data can be saved. Moreover, since the volume of learning required for learning a new reference data is saved even when the reference data is changed, the volume of work required for learning can be inhibited from increasing. Furthermore, since the neural network is caused to learn the defect item included in the inspection image as training data, the accuracy of the process can be inhibited from being reduced. Furthermore, since the design data is used as the reference data, the reference data can be close to the median. Furthermore, since reference data close to the median is used, the accuracy of grouping can be improved. Furthermore, since the information obtained by combining the plurality of pieces of layer information 162 included in the design data 160 is used as the reference data, the reference data can be easily generated. Furthermore, since the reference data is easily generated, an increase in the volume of work required for learning can be suppressed.

Furthermore, since the inspection image and the reference data are combined, and then the combination is subject to the process in the convolutional layer 142 and the process in the pooling layer 144, the processing volume can be inhibited from increasing. Furthermore, since each of the inspection image and the reference data is subject to the process in the convolutional layer 142 and the process in the pooling layer 144, and then the combination of the results is subject to the process in the convolutional layer 142 and the process in the pooling layer 144, the precision of the process can be improved. Furthermore, since each of the inspection image and the reference data is subject to the process in the convolutional layer 142 and the process in the pooling layer 144, and then the results are combined, the precision of the process can be improved.

A summary of an embodiment of the present disclosure is given below. A processing device (100) according to an embodiment of the present disclosure includes: a first input unit (110) that receives an inspection image to be inspected, which is obtained by imaging a product manufactured based on design data; a second input unit (112) that receives a reference data including the design data; a processing unit (114) that subjects the inspection image input to the first input unit (110) and the reference data input to the second input unit (112) to a process in a learned neural network; and an output unit (118) that outputs a grouping result of the inspection image as a processing result of the processing unit (114).

The design data (160) may include a plurality of pieces of layer information (162). The reference data input to the second input unit (112) may include information obtained by combining the plurality of pieces of layer information (162).

The processing unit (114) may (1) combine the inspection image and the reference data and then (2) subject a combination to at least one of a process in a convolutional layer (142) or a process in a pooling layer (144).

The processing unit (114) may (1) subject the inspection image to at least one of a process in the convolutional layer (142) or the process in a pooling layer (144) and subject the reference data to at least one of the process in the convolutional layer (142) or the process in the pooling layer (144), (2) combine a result of processing the inspection image and a result of processing the reference data, and (3) subject the combination to at least one of the process in the convolutional layer (142) or the process in the pooling layer (144).

The processing unit (114) (1) subjects the inspection image to at least one of a process in the convolutional layer (142) or a process in the pooling layer (144) and subjects the reference data to at least one of the process in the convolutional layer (142) or the process in the pooling layer (144), and (2) combines a result of processing the inspection image and a result of processing the reference data.

Another aspect of the present disclosure provides a processing method. The method includes the steps of: receiving an inspection image to be inspected, which is obtained by imaging a product manufactured based on design data (160); receiving a reference data including the design data (160); subjecting the received inspection image and the received reference data to a process in a neural network; and outputting a grouping result of the inspection image as a processing result.

### (Second Embodiment)

Next, a second embodiment will be described. As in the first embodiment, the second embodiment relates to a processing device that receives an inspection image and reference data and determines the inspection image based on a relationship between the inspection image and the reference data. In the first embodiment, the composite data 164 obtained by combining the plurality of pieces of layer information 162 included in the design data 160 is used as the reference data. On the other hand, in the second embodiment, the plurality of pieces of layer information 162 included in the design data 160 is used as it is as the reference data. Here, differences from the first embodiment will be mainly described.

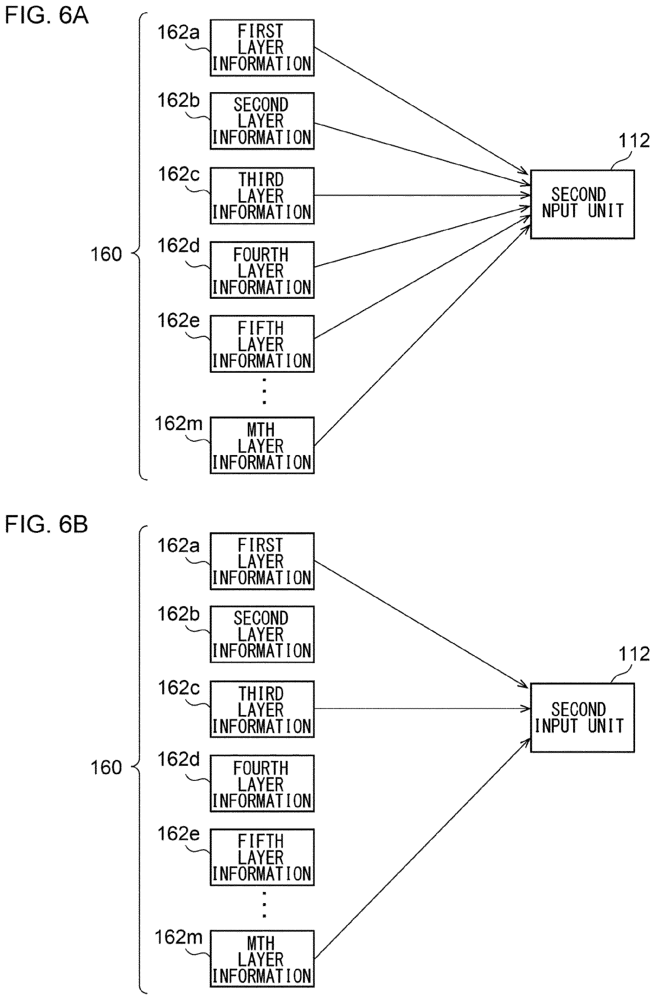

Fig. 6A and Fig. 6B show the reference data input to the second input unit 112. Fig. 6A shows the design data 160 similarly to Fig. 3, and the design data 160 includes the plurality of pieces of layer information 162. Here, the plurality of pieces of layer information 162 is not combined and is directly input to the second input unit 112 as the reference data. The processing unit 114 (not shown) subsequent to the second input unit 112 subjects the reference data to a process in a neural network, by subjecting each of the plurality of pieces of layer information 162 to the process in the neural network.

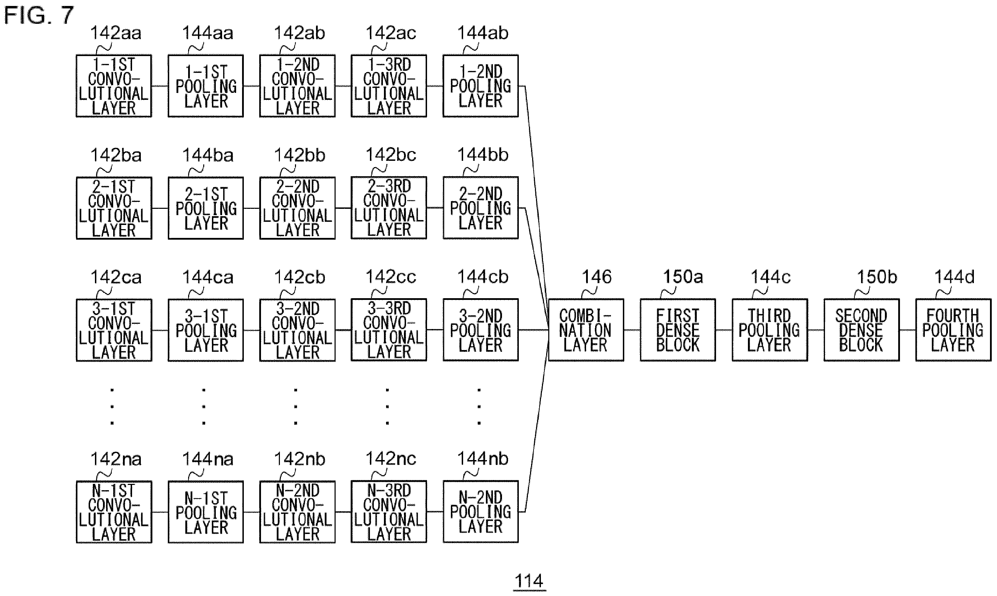

Fig. 7 shows a configuration of the processing unit 114. The processing unit 114 includes a 1-1st convolutional layer 142aa, a 1-2nd convolutional layer 142ab, a 1-3rd convolutional layer 142ac, a 2-1st convolutional layer 142ba, a 2-2nd convolutional layer 142bb, a 2-3rd convolutional layer 142bc, a 3-1st convolutional layer 142ca, a 3-2nd convolutional layer 142cb, a 3-3rd convolutional layer 142cc, an N-1st convolutional layer 142na, an N-2nd convolutional layer 142nb, an N-3rd convolutional layer 142nc, which are generically referred to as convolutional layers 142, a 1-1st pooling layer 144aa, a 1-2nd pooling layer 144ab, a 2-1st pooling layer 144ba, a 2-2nd pooling layer 144bb, a 3-1st pooling layer 144ca, a 3-2nd pooling layer 144cb, an N-1st pooling layer 144na, an N-2nd pooling layer 144nb, a third pooling layer 144c, and a fourth pooling layer 144d, which are generically referred to as pooling layers 144, a combination layer 146, and a first dense block 150a, and a second dense block 150b, which are generically referred to as dense blocks 150.

The 1-1st convolutional layer 142aa receives the inspection image from the first input unit 110, the 2-1st convolutional layer 142ba receives the first layer information 162a from the second input unit 112, the 3-1st convolutional layer 142ca receives the second layer information 162b from the second input unit 112, and the N-1st convolutional layer 142na receives the Mth layer information 162m from the second input unit 112. The number of the 1-1st convolutional layer 142aa to the N-1st convolutional layer 142na is determined according to the numbers of inspection images and the plurality of pieces of layer information 162. The 1-1st convolutional layer 142aa, the 1-1st pooling layer 144aa, the 1-2nd convolutional layer 142ab, the 1-3rd convolutional layer 142ac, and the 1-2nd pooling layer 144ab subject the inspection image to a process in a neural network as already described. The 2-1st convolutional layer 142ba, the 2-1st pooling layer 144ba, the 2-2nd convolutional layer 142bb, the 2-3rd convolutional layer 142bc, and the 2-2nd pooling layer 144bb subject the first layer information 162a to a process in a neural network. The same is true of the other layer information 162.

The combination layer 146 receives processing results from each of the 1-2nd pooling layer 144ab to the N-2nd pooling layer 144nb. The combination layer 146 combines these processing results as described above. The combination layer 146 outputs a result of combination (hereinafter, also referred to as "combined image"). The first dense block 150a is composed of a combination of the convolutional layer 142, the combination layer 146, etc. A publicly known technology may be used for the dense block 150, and a description thereof is omitted. The third pooling layer 144c, the second dense block 150b, and the fourth pooling layer 144d that follows the first dense block 150a perform the same process as described above, and a description thereof is omitted. The learning process in the convolutional layers 142 and the dense blocks 150 in Fig. 7 is adapted to the configuration of Fig. 7.

Also in Fig. 6B, the design data 160 is shown similarly to Fig. 6A, and the design data 160 includes a plurality of pieces of layer information 162. Here, a part of the plurality of pieces of layer information 162 is selected. For example, the first layer information 162a, the third layer information 162c, and the Mth layer information 162m are selected. The number of pieces of selected layer information 162 is not limited to "3". The selected layer information 162 is input to the second input unit 112 as it is as the reference data without being combined. In other words, the reference data includes one or more pieces of layer information 162 among the plurality of pieces of layer information 162. Processing subsequent thereto is the same as that described above, and thus description thereof is omitted here.

According to the present embodiment, since each of the plurality of pieces of layer information 162 included in the design data 160 is used as reference data, the accuracy of classification can be improved. In addition, since one or more pieces of the plurality of pieces of layer information 162 included in the design data 160 are used as reference data, the necessary layer information 162 can be used. Furthermore, since the necessary layer information 162 is used, the accuracy of grouping can be improved.

A summary of an embodiment of the present disclosure is given below. The design data (160) may include a plurality of pieces of layer information (162). The reference data input to the second input unit (112) may include at least one of the plurality of pieces of layer information (162).

### (Third Embodiment)

Next, a third embodiment will be described. Similar to the above-described embodiments, the third embodiment relates to a processing device that receives an inspection image and reference data, and determines the inspection image based on a relationship between the inspection image and the reference data. The design data 160 is used as the reference data in the above-described embodiments. On the other hand, in the third embodiment, the design data 160 and a reference image obtained by imaging a normal product are used as the reference data. Here, differences from the above-described embodiments will be mainly described.

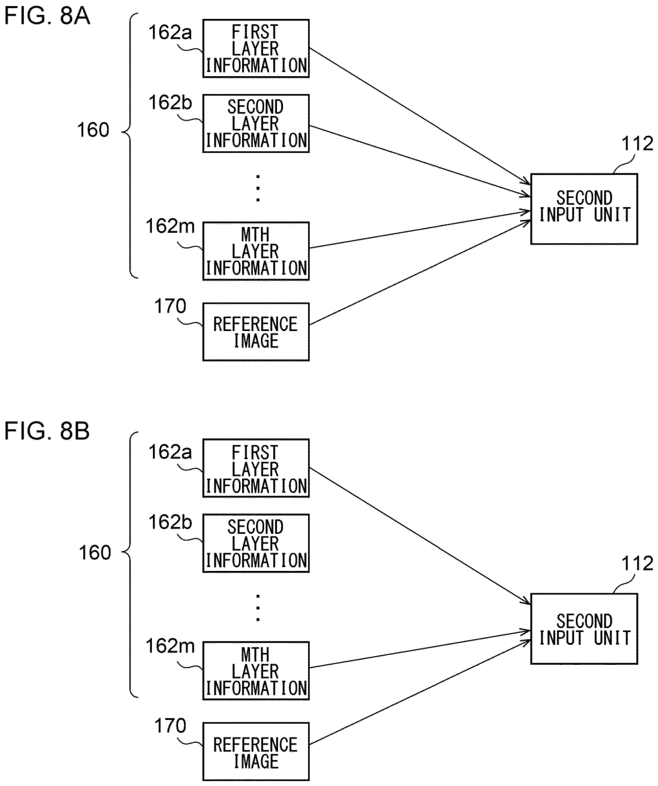

Fig. 8A and Fig. 8B show the reference data input to the second input unit 112. Fig. 8A shows the design data 160 similarly to Fig. 3, and the design data 160 includes the plurality of pieces of layer information 162. Furthermore, a reference image 170 is also shown. The reference image 170 is an image obtained by imaging the normal product manufactured based on the design data 160. The reference data input to the second input unit 112 includes the design data 160 and the reference image 170 obtained by imaging the normal product manufactured based on the design data 160. The plurality of pieces of layer information 162 and the reference image 170 are not combined and are directly input to the second input unit 112 as the reference data.

The processing unit 114 is configured in the same manner as in Fig. 7, and the 1-1st convolutional layer 142aa receives the inspection image from the first input unit 110, the 2-1st convolutional layer 142ba receives the first layer information 162a from the second input unit 112, and the 3-1st convolutional layer 142ca receives the second layer information 162b from the second input unit 112. In addition, the N-1st convolutional layer 142na receives the reference image 170 from the second input unit 112. The number of the 1-1st convolutional layer 142aa to the N-1st convolutional layer 142na is determined according to the numbers of inspection images, the plurality of pieces of layer information 162, and the reference image 170. The processing unit 114 subjects the design data 160 to the process in the learned neural network and subjects the reference image 170 to the process in the learned neural network as the processing in the learned neural network for the reference data input to the second input unit 112.

Also in Fig. 8B, the design data 160 is shown similarly to Fig. 8A, and the design data 160 includes a plurality of pieces of layer information 162. Furthermore, a reference image 170 is also shown. Here, a part of the plurality of pieces of layer information 162 is selected. For example, the first layer information 162a and the Mth layer information 162m are selected. The number of pieces of selected layer information 162 is not limited to "2". The selected layer information 162 and the reference image 170 are not combined and are directly input to the second input unit 112 as the reference data. In other words, the reference data includes one or more pieces of layer information 162 among the plurality of pieces of layer information 162 and the reference image 170. Processing subsequent thereto is the same as that described above, and thus description thereof is omitted here.

According to the present embodiment, since the design data 160 and the reference image 170 are used as the reference data, the accuracy of the grouping can be improved.

A summary of an embodiment of the present disclosure is given below. The reference data input to the second input unit (112) may include the design data (160) and a reference image (170) obtained by imaging a normal product manufactured based on the design data (160), and the processing unit (114) may subject the design data (160) to the process in the learned neural network and subject the reference image (170) to the process in the learned neural network as processing of the learned neural network for the reference data received by the second input unit (112).

### (Fourth Embodiment)

Next, a fourth embodiment will be described. Similar to the above-described embodiments, the fourth embodiment relates to a processing device that receives an inspection image and reference data, and determines the inspection image based on a relationship between the inspection image and the reference data. The processing unit 114 includes the convolutional layer 142 and the pooling layer 144 in the above-described embodiments. In the fourth embodiment, the processing unit 114 does not include the convolutional layer 142 and the pooling layer 144. Here, differences from the above-described embodiments will be mainly described.

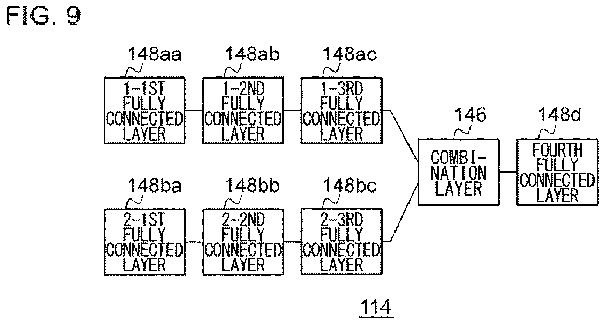

Fig. 9 shows a configuration of the processing unit 114. The processing unit 114 includes a combination layer 146, a 1-1st fully connected layer 148aa, a 1-2nd fully connected layer 148ab, a 1-3rd fully connected layer 148ac, a 2-1st fully connected layer 148ba, a 2-2nd fully connected layer 148bb, a 2-3rd fully connected layer 148bc, and a fourth fully connected layer 148d, which are generically referred to as fully connected layers 148. In other words, the processing unit 114 only includes the fully connected layers 148, except for the combination layer 146. The 1-1st fully connected layer 148aa receives the inspection image from the first input unit 110, and the 2-1st fully connected layer 148ba receives the reference data from the second input unit 112. The 1-1st fully connected layer 148aa through the 1-3rd fully connected layer 148ac subject the inspection image to the process in the fully connected layer, and the 2-1st fully connected layer 148ba through the 2-3rd fully connected layer 148bc subject the reference data to the process in the fully connected layer. The combination layer 146 receives processing results from the 1-3rd fully connected layer 148ac and the 2-3rd fully connected layer 148bc. The combination layer 146 combines these processing results as described above. The combination layer 146 outputs a result of combination (hereinafter, also referred to as "combined image"). The fourth fully connected layer 148d subjects the combined image to the process in the fully connected layer.

As in Fig. 2B, the combination layer 146 of Fig. 9 receives the result of processing the inspection image and the result of processing the reference data and outputs the combined image for processing. However, the combination layer 146 may, as in Fig. 2A, receive the inspection image and the reference data and output the combined image for processing. Alternatively, the combination layer 146 may, as in Fig. 2C, receive the result of processing the inspection image and the result of processing the reference data and output the combined image.

In the present embodiment, since the inspection image and the reference data are combined, and then the combination is subject to the process in the fully connected layer 148, the flexibility in configuration can be improved. Moreover, since the inspection image is subject to the process in the fully connected layer 148, the reference data is subject to the process in the fully connected layer 148, and then the combination of the result of processing the inspection image and the result of processing the reference data is subject to the process in the fully connected layer 148, the flexibility in configuration can be improved. Furthermore, since the inspection image is subject to the process in the fully connected layer 148, the reference data is subject to the process in the fully connected layer 148, and then the result of processing the inspection image and the result of processing the reference data are combined, the flexibility in configuration can be improved.

A summary of an embodiment of the present disclosure is given below. The processing unit (114) may (1) combine the inspection image and the reference data and then (2) subject a combination to a process in a fully connected layer (148).

The processing unit (114) may (1) subject the inspection process to a process in a fully connected layer (148) and subject the reference data to the process in the fully connected layer (148), (2) combine a result of processing the inspection image and a result of processing the reference data, and (3) subject a combination to the process in the fully connected layer (148).

The processing unit (114) (1) subjects the inspection image to a process in a fully connected layer (148) and subjects the reference data to the process in the fully connected layer (148) and (2) combines a result of processing the inspection image and a result of processing the reference data.

The present disclosure has been described above based on the embodiments. These embodiments are intended to be illustrative only and it will be understood by those skilled in the art that various modifications to constituting elements and processes could be developed and that such modifications are also within the scope of the present disclosure.

Any combination of the first embodiment to the fourth embodiment is also possible. According to the modification, it is possible to obtain the effect of any combination of the first embodiment to the fourth embodiment.

The processing unit 114 according to the first embodiment to the third embodiment is configured such that the plurality of convolutional layers 142 and the plurality of pooling layers 144 are alternately arranged. Alternatively, however, the processing unit 114 may have a configuration of a GoogLeNet-based network, a DenseNet-based network, or the like. According to this modification, the flexibility in the configuration can be improved.

The processing unit 114 according to the first embodiment to the third embodiment is configured such that the plurality of convolutional layers 142 and the plurality of pooling layers 144 are alternately arranged. Alternatively, however, the processing unit 114 may include only the convolutional layers 142 so that only the convolutional process is performed or include only the pooling layers 144 so that only the pooling process is performed. According to this modification, the flexibility in the configuration can be improved.

### INDUSTRIAL APPLICABILITY

According to the present disclosure, it is possible to inhibit reduction in the accuracy of the process, while inhibiting an increase in the volume of work required for learning at the same time.

### REFERENCE SIGNS LIST

100 processing device, 110 first input unit, 112 second input unit, 114 processing unit, 116 training data input unit, 118 output unit, 140 input image, 142 convolutional layer, 144 pooling layer, 146 combination layer, 148 fully connected layer, 150 dense block, 160 design data, 162 layer information, 164 composite data, 170 reference image

## Claims

1. A processing device comprising:
a first input unit structured to receive an inspection image to be inspected, which is obtained by imaging a product manufactured based on design data;
a second input unit structured to receive a reference data including the design data;
a processing unit structured to subject the inspection image input to the first input unit and the reference data input to the second input unit to a process in a learned neural network; and
an output unit structured to output a grouping result of the inspection image as a processing result of the processing unit.

2. The processing device according to claim 1, wherein the reference data input to the second input unit includes the design data and a reference image, which is obtained by imaging a normal product manufactured based on the design data, and
the processing unit subjects the design data to the process in the learned neural network and subjects the reference image to the process in the learned neural network as processing of the learned neural network for the reference data received by the second input unit.

3. The processing device according to claim 1 or 2, wherein the design data includes a plurality of pieces of layer information, and
the reference data input to the second input unit includes information obtained by combining the plurality of pieces of layer information.

4. The processing device according to claim 1 or 2, wherein the design data includes a plurality of pieces of layer information, and
the reference data input to the second input unit includes at least one of the plurality of pieces of layer information.

5. The processing device according to claim 1 or 2, wherein the processing unit (1) combines the inspection image and the reference data, and then (2) subjects a combination to at least one of a process in a convolutional layer or a process in a pooling layer.

6. The processing device according to claim 1 or 2, wherein the processing unit (1) subjects the inspection image to at least one of a process in a convolutional layer or a process in a pooling layer and subjects the reference data to at least one of the process in the convolutional layer or the process in the pooling layer, (2) combines a result of processing the inspection image and a result of processing the reference data, and (3) subjects a combination to at least one of the process in the convolutional layer or the process in the pooling layer.

7. The processing device according to claim 1 or 2, wherein the processing unit (1) subjects the inspection image to at least one of a process in a convolutional layer or a process in a pooling layer and subjects the reference data to at least one of the process in the convolutional layer or the process in the pooling layer, and (2) combines a result of processing the inspection image and a result of processing the reference data.

8. The processing device according to claim 1 or 2, wherein the processing unit (1) combines the inspection image and the reference data, and then (2) subjects a combination to a process in a fully connected layer.

9. The processing device according to claim 1 or 2, wherein the processing unit (1) subjects the inspection image to a process in a fully connected layer and subjects the reference data to the process in the fully connected layer, (2) combines a result of processing the inspection image and a result of processing the reference data, and (3) subjects a combination to the process in the fully connected layer.

10. The processing device according to claim 1 or 2, wherein the processing unit (1) subjects the inspection image to a process in a fully connected layer and subjects the reference data to the process in the fully connected layer, and (2) combines a result of processing the inspection image and a result of processing the reference data.

11. A processing method comprising the steps of:
receiving an inspection image to be inspected, which is obtained by imaging a product manufactured based on design data;
receiving a reference data including the design data;
subjecting the received inspection image and the received reference data to a process in a learned neural network; and
outputting a grouping result of the inspection image as a processing result.
